# FASCICULE DE BREVET EUROPEEN

(11) **EP 4 568 614 B1**
(45) Date de publication et mention de la délivrance du brevet: **30.09.2026**
(21) Numéro de dépôt: 23790239.0
(22) Date de dépôt: 09.08.2023
(51) Int. Cl.: A61C 7/08, A61C 7/10, B33Y 80/00

(54) **MODELEUR MAXILLAIRE**
OBERKIEFERMODELLIERER
MAXILLARY MODELLER

(30) Priorité: 09.08.2022 FR 2208206
(43) Date de publication de la demande: 18.06.2025
(73) Titulaire: Zarrinpour, Arash, 75016 Paris (FR); Bergeyron, Patrice, 1246 Corsier (CH)
(72) Inventeur: Zarrinpour, Arash, 75016 Paris (FR); Bergeyron, Patrice, 1246 Corsier (CH)
(74) Mandataire: Ipsilon
(86) Numéro de dépôt international: PCT/EP2023/072013
(87) Numéro de publication internationale: WO 2024/033402

(56) Documents cités:
- WO-A1-2018/102770
- WO-A1-2019/068032
- WO-A1-2019/069163
- WO-A2-2023/076985
- US-A1- 2016 081 769
- US-A1- 2020 390 522
- US-A1- 2022 110 719

## Description

### Domaine technique

La présente invention concerne un modeleur maxillaire, un procédé de fabrication de modeleurs maxillaires et un dispositif pour la fabrication desdits modeleurs maxillaires.

### Technique antérieure

Dans le cadre d'une malocclusion, il est parfois nécessaire de réaliser préalablement une expansion maxillaire et/ou de provoquer un changement de la forme maxillaire permettant d'élargir et/ou de modifier une arcade dentaire supérieure d'un utilisateur.

Pour réaliser une telle expansion maxillaire et/ou provoquer un changement de la forme maxillaire, on utilise classiquement un type d'appareils orthodontiques particulier appelé « plaque à vérin ».

Une plaque à vérin est composée de deux parties d'appui reliées par un vérin central, le vérin étant actionné à intervalles réguliers afin de permettre d'écarter latéralement les parties d'appui l'une de l'autre et ainsi élargir progressivement le palais. Les parties d'appui comportent des fils configurés pour être fixés sur les dents de l'utilisateur permettant de maintenir la plaque à vérin sur le palais de l'utilisateur. Les parties d'appui peuvent en outre comporter des zones en résine destinées à être plaquées contre le palais de l'utilisateur lorsque la plaque à vérin est mise en bouche.

Ce type d'appareils orthodontiques nécessite donc une action régulière de la part d'un tiers, généralement un proche ou un professionnel de soins dentaires, afin d'actionner le vérin pour écarter progressivement les deux parties d'appui. En outre, ces actions peuvent entrainer des mauvaises manipulations, ou nécessiter de nombreux déplacements chez un professionnel de soins dentaires.

Il existe donc un besoin pour limiter les déplacements chez un professionnel de soins dentaires et faciliter le port d'une plaque à vérin.

De plus, une plaque à vérin est classiquement fabriquée manuellement par un professionnel, en particulier un prothésiste, à partir d'un moulage de mâchoire supérieure en vue d'obtenir une empreinte dentaire.

Le professionnel courbe dans un premier temps des fils métalliques destinés à être accrochés aux dents de l'individu et maintenir la plaque à vérin, la courbe des fils métalliques étant définie en positionnant lesdits fils sur une empreinte dentaire de la mâchoire supérieure de l'individu. Puis, le professionnel fabrique une résine recouvrant la zone correspondant au palais sur l'empreinte dentaire de la mâchoire supérieure et positionne un vérin dans la résine. La résine est ensuite découpée en deux parties au niveau du vérin, de sorte que lorsque le vérin est actionné, les deux parties en résine s'écartent latéralement l'une de l'autre.

La fabrication manuelle de ces appareils orthodontiques peut entrainer des gênes, voire des douleurs, résultant par exemple d'une imprécision dans le moulage ou du positionnement du vérin dans la résine, la plaque à vérin pouvant ne pas être exactement bien adaptée au palais de l'utilisateur.

Il existe donc également un besoin pour améliorer la fabrication d'une plaque à vérin.

De façon générale, lorsque le palais de l'utilisateur est particulièrement creux et étroit, il est difficile de positionner le vérin contre le palais de l'utilisateur. Pour pallier ce problème, une couche importante de résine est ajoutée, ce qui peut entraîner une gêne importante.

Enfin, des aliments peuvent se coincer dans la plaque à vérin, notamment au niveau du vérin ou au niveau des fils.

Il existe un besoin permanent pour améliorer le confort de l'utilisateur, en particulier en vue d'améliorer l'observance, mais également l'hygiène de l'utilisateur.

Les documents WO2019069163A1, WO2019068032A1, US2022110719A1, WO2018102770A1 et US2016081769A1 décrivent des modeleurs maxillaires orthodontiques.

Indépendamment du traitement d'une malocclusion, il peut être également utile de modifier la forme du palais, notamment pour modifier la forme du visage. Une modification de la forme du palais ne s'accompagne pas nécessairement d'une action sur l'arcade dentaire supérieure (maxillaire), en particulier pour l'élargir ou la rétrécir. Elle peut par exemple conduire à localement déformer le palais, par exemple en élargissant localement une suture du palais.

Il existe un besoin permanent pour une solution simple et confortable pour le patient, pour modifier la forme du palais, en particulier sans agir sur la forme de l'arcade supérieure.

Un but de l'invention est de répondre, au moins partiellement, à ces besoins.

### Exposé de l'invention

L'invention fournit un modeleur maxillaire destiné à être porté, dans une position de service, par une arcade dentaire d'un utilisateur pour modifier la forme du palais, le modeleur maxillaire étant monobloc et amovible et comportant :
- une partie palatale centrale configurée pour être en contact avec le palais de l'utilisateur lorsque le modeleur maxillaire est en position de service,
- une première et une deuxième parties dentaires comportant chacune au moins une, de préférence plusieurs cavités configurées pour recevoir des dents de l'utilisateur lorsque le modeleur maxillaire est en position de service,

les première et deuxième parties dentaires s'étendant de part et d'autre de la partie palatale centrale,
la partie palatale centrale étant configurée pour, dans la position de service, exercer sur le palais des forces adaptées pour en modifier la forme,
le modeleur maxillaire étant caractérisé en ce que la forme des cavités des première et deuxième parties dentaires est adaptée pour, dans la position de service, maintenir en position le modeleur maxillaire sur les dents, sans exercer de contrainte sur les dents tendant à élargir l'arcade dentaire.

Le modeleur maxillaire selon l'invention est monobloc, c'est-à-dire qu'il forme un bloc dont la géométrie au repos (c'est-à-dire en l'absence de contraintes de déformation) est constante. En particulier, il ne comporte pas de vérin. Toute modification de la position du vérin entraine en effet une modification de la géométrie au repos du modeleur maxillaire.

Le modeleur maxillaire ne peut pas être démonté en plusieurs morceaux. Dans un mode de réalisation préféré, le modeleur maxillaire ne comporte pas de fil métallique.

Un modeleur maxillaire selon l'invention permet avantageusement de limiter l'accumulation d'aliments et améliore ainsi l'hygiène dentaire.

Les première et deuxième parties dentaires peuvent avoir la forme d'une fraction d'une gouttière orthodontique conventionnelle. Les première et deuxième parties dentaires peuvent présenter les caractéristiques classiques d'une gouttière orthodontique, en particulier dans une configuration qui ne fait pas partie de l'invention, la forme des cavités de la première et/ou de la deuxième parties dentaires peut être adaptée pour, dans la position de service, maintenir en position le modeleur maxillaire sur les dents, tout en exerçant une contrainte sur les dents, pour élargir l'arcade tout en modifiant l'agencement des dents.

Dans une configuration qui ne fait pas partie l'invention, la forme des cavités de la première et/ou de la deuxième parties dentaires est adaptée pour, dans la position de service, maintenir en position le modeleur maxillaire sur les dents, tout en exerçant une contrainte sur les dents pour élargir l'arcade et sans modifier l'agencement des dents.

La partie palatale centrale épouse la forme du palais tout en reliant les première et deuxième parties dentaires.

La partie palatale centrale peut avantageusement être configurée de sorte à imposer une forme particulière au palais, modifiant progressivement la forme du palais.

Ainsi, lorsque le modeleur maxillaire est en position de service dans la bouche de l'utilisateur, le modeleur permet non seulement l'expansion de l'arcade dentaire mais également, dans le même temps, la modification de la forme du palais.

Le modeleur maxillaire peut être en un matériau polymère, de préférence transparent. En particulier, il peut être fabriqué par impression 3D ou par thermoformage.

La partie palatale centrale peut présenter une épaisseur variable.

De préférence l'épaisseur de la partie palatale est sensiblement constante. L'épaisseur maximale et/ou minimale et/ou moyenne de la partie palatale centrale peut être supérieure à 0,5 mm, ou supérieure à 1 mm et/ou inférieure à 7 mm, de préférence inférieure à 5 mm, de préférence inférieure à 3 mm.

Les première et deuxième parties dentaires peuvent présenter chacune une épaisseur variable.

De préférence, les épaisseurs des première et deuxième parties dentaires sont sensiblement constantes. En particulier, les épaisseurs des première et deuxième parties dentaires sont sensiblement égales.

Les épaisseurs maximales et/ou minimales et/ou moyennes des première et deuxième parties dentaires peuvent être supérieures à 0,3 mm, ou supérieures à 0,5 mm ou supérieures à 1 mm et/ou inférieures à 3 mm, de préférence inférieures à 2 mm.

Dans un mode de réalisation particulier, l'épaisseur de la partie palatale centrale est supérieure en au moins un point aux épaisseurs de la première et de la deuxième parties dentaires.

De préférence, le modeleur maxillaire est configuré de sorte que la première partie dentaire exerce sur l'arcade dentaire une force similaire mais opposée à une force exercée sur l'arcade dentaire par la deuxième partie dentaire.

Comme on le verra plus en détail dans la suite de la description, un modeleur maxillaire selon l'invention permet avantageusement d'améliorer non seulement l'hygiène dentaire mais également l'indépendance de l'utilisateur. En effet, l'utilisateur peut positionner le modeleur maxillaire dans sa bouche sans nécessité d'une aide quelconque. Un tel modeleur maxillaire est facilement manipulable.

L'invention fournit également un procédé de fabrication d'une série de modeleurs maxillaires selon l'invention comportant les étapes successives suivantes :
a) génération d'un modèle tridimensionnel numérique du palais et de l'arcade dentaire destinée à porter les modeleurs maxillaires, dit « modèle initial »,
b) à partir du modèle initial, génération d'un plan de traitement pour modifier la forme du palais en déterminant un modèle tridimensionnel numérique final, dit « modèle final », et des modèles tridimensionnels numériques intermédiaires, dits « modèles intermédiaires », les modèles intermédiaires représentant des configurations du palais telles qu'attendues à différents instants du plan de traitement, dits « instants intermédiaires », en vue d'atteindre une configuration finale du palais, la configuration finale étant représentée par le modèle final, les modèles intermédiaires étant déterminés pour simuler une modification progressive de la forme du palais ;
c) pour chaque modèle intermédiaire et final déterminé à l'étape b), conception, au moyen d'un ordinateur, d'un modeleur maxillaire de sorte à obtenir ladite série de modeleurs maxillaires destinés à être portés successivement,
d) fabrication des modeleurs maxillaires, de préférence par thermoformage ou par impression 3D.

Le port de modeleurs maxillaires successifs permet de modifier progressivement la forme du palais. Dans des configurations qui ne font pas partie de l'invention, le port d'un premier modeleur maxillaire va permettre d'élargir l'arcade de façon à atteindre une configuration des dents de l'utilisateur similaire, de préférence identique, à la configuration d'un premier modèle intermédiaire. Le port du dernier modeleur maxillaire, conçu à partir du modèle final, permettra d'élargir l'arcade dentaire de l'utilisateur de façon à atteindre une configuration des dents de l'utilisateur similaire, de préférence identique, à la configuration du modèle final. De façon similaire avec des modeleurs maxillaires de l'invention, la forme du palais évolue progressivement grâce aux forces exercées par le modeleur maxillaire sur le palais lors du port dudit modeleur maxillaire. En particulier, l'épaisseur variable de la partie palatale centrale permet d'exercer une force plus ou moins importante sur le palais.

Le changement régulier de modeleurs maxillaires permet d'améliorer nettement l'hygiène dentaire de l'utilisateur.

Au lieu d'actionner un vérin dans la bouche de l'utilisateur, pour écarter les deux parties d'appui l'une de l'autre, il suffit à l'utilisateur de retirer un modeleur maxillaire pour le remplacer par le suivant.

L'utilisateur peut, à intervalles réguliers, changer seul de modeleur maxillaire. Cela limite avantageusement les déplacements chez un professionnel de soins dentaires et limite les erreurs de manipulation pouvant provenir d'un mauvais réglage du vérin d'une plaque à vérin.

Chacun des modeleurs maxillaires est de préférence conçu à partir d'un modèle intermédiaire ou du modèle final, de préférence de manière que sa forme reproduise tout ou partie de la forme dudit modèle intermédiaire ou final, c'est-à-dire de manière à présenter au moins partiellement une forme complémentaire avec ledit modèle intermédiaire ou final.

Les étapes a) à c) du procédé selon l'invention peuvent être mises en œuvre par ordinateur, augmentant la précision lors de la conception et de la fabrication des modeleurs maxillaires. Le procédé selon l'invention peut comporter une ou plusieurs des caractéristiques optionnelles suivantes :
- à l'étape a), la génération du modèle initial est réalisée par moulage en vue d'obtenir une empreinte dentaire de l'arcade, puis numérisation de l'empreinte, ou par acquisition d'images numériques 2D ou 3D, par exemple au moyen d'un scanner 3D ou d'une radiographie ;
- l'étape a) est mise en œuvre au moyen d'un scanner 3D;
- à l'étape b), la détermination du plan de traitement est réalisée par simulation de mouvements des dents et découpage de la simulation en étapes, chaque étape correspondant aux mouvements effectués pour atteindre une configuration d'un modèle intermédiaire ou final, notamment la simulation étant réalisée au moyen d'un logiciel informatique tel que NEMOCAST 3D ;
- à l'étape b), la détermination du plan de traitement comporte une modification de positionnement de dents, en particulier une rotation d'au moins une dent par rapport aux dents adjacentes et/ou une translation d'au moins une dent par rapport aux dents adjacentes;
- à l'étape b), la détermination du plan de traitement comporte une modification de la forme du palais ;
- l'étape b) est mise en œuvre par ordinateur ;
- à l'étape c), un ou plusieurs modeleurs maxillaires sont conçus de sorte à modifier le positionnement d'une ou plusieurs dents destinées à porter la première ou la deuxième partie dentaire ;
- l'intervalle entre deux instants intermédiaires successifs est inférieur à deux semaines, mieux inférieur à dix jours, de préférence l'intervalle entre deux instants intermédiaires successifs est sensiblement d'une semaine ;
- l'étape c) est mise en œuvre par ordinateur ;
- à l'étape c), la conception d'un modeleur maxillaire comprend la détermination d'une épaisseur de matériau pour la partie palatale centrale, d'une épaisseur pour la première partie dentaire et d'une épaisseur pour la deuxième partie dentaire ;
- lesdites épaisseurs sont différentes ;
- la partie palatale centrale a une épaisseur variable et/ou la première partie dentaire a une épaisseur variable et/ou la deuxième partie dentaire a une épaisseur variable;
- l'étape d) est mise œuvre au moyen d'une imprimante 3D ;
- après l'étape d), les modeleurs maxillaires sont remis ou envoyés à l'utilisateur.

La description présente également un produit programme d'ordinateur comprenant des instructions qui, lorsque le programme est exécuté par un ordinateur, conduisent celui-ci à mettre en œuvre les étapes b) et c), et de préférence d) pour commander une machine de fabrication. Un tel programme peut être mis en oeuvre pour exécuter le procédé de fabrication de la présente invention.

Le produit programme d'ordinateur peut également comprendre en particulier des instructions qui, lorsque le programme est exécuté par un ordinateur, conduisent celui-ci à mettre en œuvre les étapes suivantes :
1) réception d'un modèle tridimensionnel numérique d'une arcade dentaire destinée à porter les modeleurs maxillaires, dit « modèle initial » ;
2) à partir du modèle initial, génération d'un plan de traitement notamment pour élargir l'arcade dentaire et/ou modifier la forme du palais en déterminant un modèle tridimensionnel numérique final, dit « modèle final », et des modèles tridimensionnels numériques intermédiaires, dits « modèles intermédiaires », les modèles intermédiaires représentant des configurations de l'arcade dentaire telles qu'attendues à différents instants du plan de traitement, dits « instants intermédiaires », en vue d'atteindre une configuration finale de l'arcade dentaire, la configuration finale étant représentée par le modèle final,
3) pour chaque modèle intermédiaire et final déterminé à l'étape 2), conception d'un modeleur maxillaire de sorte à obtenir une série de modeleurs maxillaires destinés à être portés successivement, chacun des modeleurs maxillaires étant conçu par complémentarité de forme avec au moins une partie d'un modèle intermédiaire ou final,
4) transmission d'instructions de fabrication des modeleurs maxillaires, de préférence vers une imprimante 3D.

La description présente également :
- un programme dordinateur en autonomie ou en coopération avec un opérateur, par exemple un professionnel de soins dentaires, pouvant commander une machine de fabrication des modeleurs maxillaires, la machine de fabrication étant par exemple une imprimante 3D ;
- un support informatique sur lequel est enregistré un tel programme, par exemple une mémoire ou un CD-ROM, et
- un ordinateur dans lequel est chargé un tel programme.

La description présente également un dispositif de fabrication de modeleurs maxillaires comportant des moyens d'acquisition d'un modèle tridimensionnel d'une arcade dentaire pour la mise en œuvre d'une étape a), par exemple un scanner 3D, un programme d'ordinateur pour la mise en œuvre des étapes b) et c), et de préférence une machine de fabrication pour la mise en œuvre d'une étape d) par exemple une imprimante 3D.

### Définitions

Par « utilisateur », on entend toute personne destinée à porter un modeleur maxillaire selon l'invention ou toute personne pour laquelle un procédé, utilisant le modeleur maxillaire de l'invention, est mis en œuvre,
que cette personne soit malade ou non.

La « position de service » est la position d'un modeleur maxillaire lorsqu'il a été fixé sur une arcade dentaire. Classiquement, la fixation est désactivable par l'utilisateur, par une simple traction du modeleur maxillaire.

Un organe fixé sur l'arcade de support est dit « amovible » lorsqu'il peut être détaché, à la main, par l'utilisateur. Un modeleur maxillaire selon l'invention est amovible.

Par « modèle », on entend un modèle tridimensionnel numérique. Un modèle est constitué d'un ensemble de voxels.

« Comprendre », « comporter » ou « présenter » doivent être interprétés de manière large, non limitative, sauf indication contraire.

Les qualificatifs « droite », « gauche », « haut », « bas », « dessus », « dessous », « face » doivent être interprétés en référence à la position de service.

### Brève description des dessins

D'autres caractéristiques et avantages de l'invention apparaîtront encore à la lecture de la description détaillée qui va suivre et à l'examen du dessin annexé dans lequel :
[Fig 1] la figure 1 est un exemple de plaque à vérin ;
[Fig 2] la figure 2 représente un modeleur maxillaire, certaines variantes de celui-ci faisant partie de l'invention, en vue de dessus et en vue de face ;
[Fig 3] la figure 3 schématise un plan de traitement ;
[Fig 4] la figure 4 illustre la conception d'un modeleur maxillaire, certaines variantes de celui-ci faisant partie de l'invention, vu de dessous et vu de face ;
[Fig 5] la figure 5 illustre un procédé de fabrication, certaines variantes de celui-ci faisant partie de l'invention ; et
[Fig 6] la figure 6 est un schéma bloc d'un dispositif, certaines variantes de celui-ci faisant partie de l'invention.

D'autres détails et avantages de l'invention sont fournis dans la description détaillée qui va suivre, fournie à des fins illustratives et non limitatives.

### Description détaillée

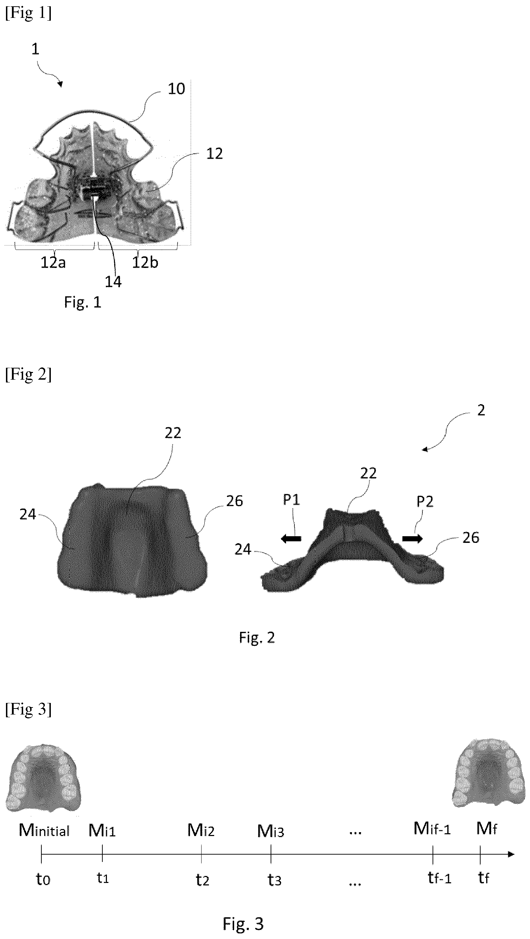

Comme représenté à la figure 1, une plaque à vérin 1 comporte classiquement des fils métalliques 10, un vérin 14, les fils métalliques et le vérin étant maintenus solidaires au moyen d'une plaque de résine 12, scindée en deux parties 12a et 12b au niveau du vérin selon une direction antéropostérieure. A intervalles réguliers, le vérin 14 est actionné, écartant latéralement les deux parties 12a et 12b l'une de l'autre. Cette action nécessite une intervention manuelle d'un opérateur extérieur.

La figure 2 représente un modeleur maxillaire 2 monobloc amovible comportant une partie palatale centrale 22, une première partie dentaire 24 et une deuxième partie dentaire 26.

Le modeleur maxillaire peut être conformé de sorte que, dans une configuration qui ne correspond pas à l'invention, en position de service, il exerce des forces transversales sur l'arcade dentaire tendant à élargir l'arcade dentaire, vers l'extérieur de la bouche, référencées P1 et P2.

De préférence, le modeleur maxillaire 2 est en un matériau polymère, de préférence transparent.

Le modeleur maxillaire 2 peut être fabriqué par impression 3D ou par thermoformage.

Ces méthodes de fabrication permettent l'automatisation de la fabrication des modeleurs maxillaires. La fabrication d'un modeleur maxillaire peut être réalisée sans intervention humaine.

Les première et deuxième parties dentaires 24, 26 peuvent prendre en partie la forme d'une gouttière orthodontique conventionnelle.

En particulier, elles peuvent être conformées de sorte qu'elles permettent le mouvement des dents, en rotation ou en translation. Ainsi, dans une configuration qui ne correspond pas à l'invention, en plus de permettre l'expansion palatine, un modeleur maxillaire permet également de repositionner les dents.

Dans un mode de réalisation particulier, un modeleur maxillaire 2 selon l'invention est destiné à être porté par un utilisateur moins de deux semaines, mieux moins de dix jours et/ou plus de 2 jours. Dans un mode de réalisation préféré, un modeleur maxillaire selon l'invention est destiné à être porté une semaine.

L'utilisateur peut facilement positionner, retirer et changer de modeleur maxillaire, sans nécessité d'aide d'un opérateur extérieur.

Avantageusement, un professionnel de soins dentaires fournit un ensemble de modeleurs maxillaires selon l'invention à l'utilisateur, les modeleurs maxillaires étant configurés pour être portés successivement, selon un ordre prédéfini. L'utilisateur peut changer, à intervalles réguliers, de modeleurs maxillaires, le port de chaque modeleur maxillaire permettant une expansion palatale de plus de 1 dixième de millimètres, plus de 5 dixièmes de millimètres et/ou moins de 100 dixièmes de millimètres, moins de 10 dixièmes de millimètres.

Contrairement aux plaques à vérin 1 classiquement utilisées, les modeleurs maxillaires selon l'invention s'adaptent parfaitement aux dents de l'utilisateur.

L'utilisation de fils métalliques n'est alors pas nécessaire. L'absence de fils métalliques et de vérin facilite l'entretien de l'appareil orthodontique et l'hygiène dentaire en est améliorée. De même, le changement régulier de modeleur maxillaire au cours d'un traitement participe à l'amélioration de l'hygiène dentaire au cours du traitement. En outre, le confort de l'utilisateur en est amélioré.

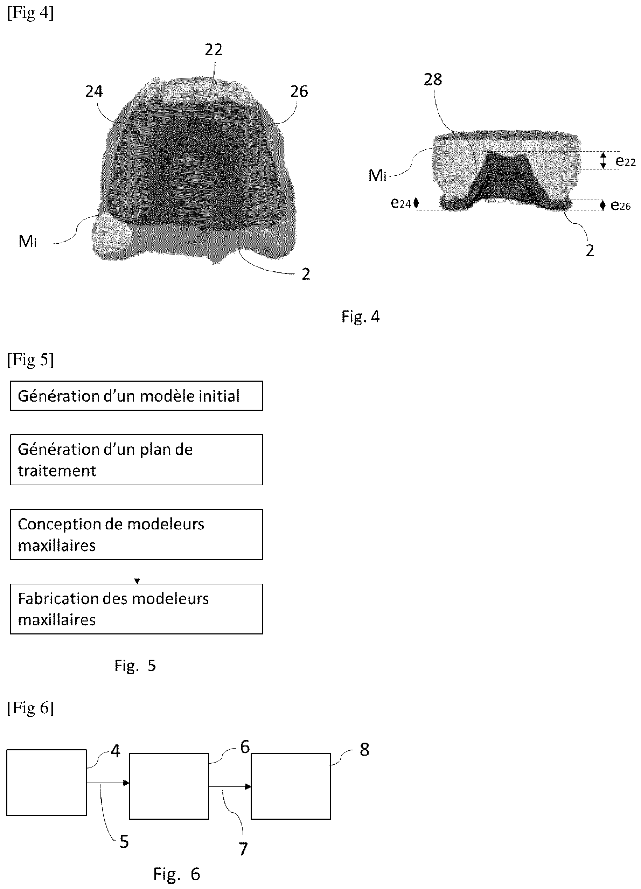

L'invention porte également sur un procédé de fabrication de modeleurs maxillaires selon l'invention. Un procédé selon l'invention est illustré à la figure 5.

**A l'étape** a), un modèle tridimensionnel numérique de l'arcade dentaire est généré, appelé « modèle initial ».

Comme illustré sur la figure 3, le modèle initial Mᵢₙᵢₜᵢₐₗ est généré à un instant t₀, la configuration de l'arcade dentaire à l'instant t₀ représentant la configuration de l'arcade dentaire avant la mise en œuvre d'un traitement d'expansion palatale.

Le modèle initial peut être généré par toutes les méthodes classiquement mises en œuvre en vue d'obtenir un modèle tridimensionnel digital d'une arcade dentaire d'un utilisateur.

Le modèle initial peut être généré au moyen d'un scanner 3D.

Le modèle initial peut être généré par moulage de l'arcade dentaire de l'utilisateur, puis par numérisation de l'empreinte dentaire obtenue par moulage. L'empreinte est par exemple en plâtre.

A **l'étape** b), un plan de traitement pour une expansion palatale est généré.

L'étape b) comporte la détermination d'un modèle tridimensionnel numérique final M_{f}, appelé « modèle final » et la détermination de modèles intermédiaires Mᵢ₁, Mᵢ₂, Mᵢ₃, M_{if-1}, appelés « modèles intermédiaires », les modèles intermédiaires représentant des configurations de l'arcade dentaire telles qu'attendues à différents instants du plan de traitement t₁, t₂, t₃, t_{f-1}, appelés « instants intermédiaires », en vue d'atteindre une configuration finale de l'arcade dentaire, la configuration finale étant représentée par le modèle final M_{f}.

De préférence, le modèle initial est découpé de manière à isoler des modèles pour les première et deuxième parties dentaires 24, 26. Les deux modèles de partie dentaire sont déplacés, par exemple par un orthodontiste, pour atteindre la configuration du modèle final, ce qui permet de simuler le déroulement du plan de traitement et de définir les modèles intermédiaires de l'arcade dentaire telles qu'attendues aux instants intermédiaires. Le plan de traitement est une simulation permettant de visualiser le déroulement théorique du traitement.

Un exemple schématisant un plan de traitement est représenté figure 3.

Le plan de traitement peut être déterminé de sorte que la durée une durée entre deux instants intermédiaires successifs est inférieure à deux semaines, mieux inférieure à dix jours et de préférence, supérieure à 2 jours. De préférence, le plan de traitement est déterminé de sorte que la durée une durée entre deux instants intermédiaires successifs est sensiblement d'une semaine.

Les modèles intermédiaires peuvent être déterminés pour simuler une expansion palatale de quelques dixièmes ou de quelques centièmes de millimètres entre deux instants intermédiaires successifs, par exemple une expansion palatale de plus de 1 dixième de millimètres, plus de 5 dixièmes de millimètres et/ou moins de 100 dixièmes de millimètres, moins de 10 dixièmes de millimètres.

La détermination d'un plan de traitement peut être réalisée au moyen d'un outil informatique, par exemple au moyen d'un logiciel tel que NEMOCAST 3D.

La détermination d'un plan de traitement est bien connue de l'homme de l'art.

La détermination d'un plan de traitement comporte, dans la configuration de l'invention, la modification de la forme du palais. Les modèles intermédiaires sont alors déterminés pour simuler une modification progressive du palais. Dans une configuration qui ne correspond pas à l'invention, les modèles intermédiaires et final sont ainsi adaptés pour assurer non seulement l'expansion palatale, mais aussi une modification de la forme du palais.

Lorsqu'un déplacement de dents est également souhaité pendant l'expansion maxillaire, cette configuration ne faisant pas partie de l'invention, le modèle initial est de préférence découpé en modèles de dent. Les modèles de dent des modèles intermédiaires et final sont ensuite déplacés, par exemple par un orthodontiste, pour atteindre la configuration souhaitée aux différents instants intermédiaires et à l'instant final. Les modèles intermédiaires et final sont ainsi adaptés pour assurer non seulement l'expansion palatale, mais aussi une modification de l'agencement des dents.

Dans un mode de réalisation particulier ne faisant également pas partie de l'invention, les modèles intermédiaires et final sont adaptés pour assurer non seulement l'expansion palatale, mais aussi une modification de l'agencement des dents et une modification de la forme du palais.

**A l'étape c),** une série de modeleurs maxillaires est conçue, les modeleurs maxillaires étant destinés à être portés successivement.

Pour chaque modèle intermédiaire et final, un modeleur maxillaire est conçu.

Dans un mode de réalisation préféré de l'invention, le nombre de modeleur maxillaire conçu est égal au nombre de modèles intermédiaires et final déterminé à l'étape b).

A partir du plan de traitement illustré figure 3, on peut concevoir par exemple une série de modeleurs maxillaires de telle sorte que le modeleur maxillaire conçu à partir du modèle intermédiaire Mᵢ₁ est destiné à être porté entre l'instant t₀ et l'instant t₁, le modeleur maxillaire conçu à partir du modèle intermédiaire Mᵢ₂ est destiné à être porté entre l'instant t₁ et t₂, le modeleur maxillaire conçu à partir du modèle intermédiaire Mᵢ₃ est destiné à être porté entre l'instant t₂ et t₃, ..., le modeleur maxillaire conçu à partir du modèle final M_{f} est destiné à être porté entre l'instant t_{f-1} et t_{f}.

A la figure 4 est illustré un exemple de conception d'un modeleur maxillaire 2 à partir d'un modèle intermédiaire Mᵢ. La conception peut comporter la détermination d'une épaisseur e₂₂ de la partie palatale centrale 22, d'une épaisseur e₂₄ de la première partie dentaire 24 et d'une épaisseur e₂₆ de la deuxième partie dentaire 26. Par épaisseur d'une partie, on peut comprendre une épaisseur maximale, une épaisseur moyenne, une épaisseur minimale, l'épaisseur pouvant varier sur l'ensemble de la partie en question. De préférence l'épaisseur e₂₂ de la partie palatale centrale est sensiblement constante et/ou l'épaisseur e₂₄ de la première partie dentaire est sensiblement constante et/ou l'épaisseur e₂₆ de la deuxième partie dentaire est sensiblement constante.

L'épaisseur e₂₄ de la première partie dentaire et l'épaisseur e₂₆ de la deuxième partie dentaire peuvent être sensiblement égales.

Les épaisseurs e₂₂, e₂₄, e₂₆ dépendent de préférence des forces P₁, P₂ que l'on souhaite exercer sur l'arcade dentaire pour permettre d'obtenir l'expansion palatale recherchée.

Dans un mode de réalisation préféré de l'invention, la conception de chaque modeleur maxillaire comporte la détermination d'une surface intrados 28 dudit modeleur définie par complémentarité de forme avec le modèle intermédiaire ou final à partir duquel le modeleur maxillaire est conçu, puis la détermination d'une épaisseur en chaque point de la surface intrados 28 déterminée au préalable, l'épaisseur dépendant des forces P₁, P₂ que l'on souhaite exercer sur l'arcade dentaire pour permettre d'obtenir l'expansion palatale recherchée.

En particulier, l'épaisseur dépend du matériau utilisé pour la fabrication du modeleur maxillaire.

La transmission de force est d'autant plus grande que le modeleur est flexible, et donc que l'épaisseur locale est grande. En ayant connaissance des propriétés du matériau constitutif d'un modeleur, il est possible d'évaluer, avec un modèle prédictif informatique par exemple, les contraintes locales subies par ce modeleur lorsqu'il est forcé d'adopter sa forme dans la position de service. Un tel modèle prédictif permet également de déterminer l'effet d'une modification de la forme d'un modeleur, et en particulier l'effet d'une modification locale d'épaisseur, sur les contraintes exercées par le modeleur dans la position de service. Réciproquement, le modèle prédictif peut être utilisé pour déterminer la forme, et en particulier l'épaisseur du modeleur, en fonction d'un ensemble de contraintes souhaité.

En particulier, les méthodes classiquement utilisées pour concevoir des gouttières orthodontiques conventionnelles peuvent être mises en œuvre pour concevoir le modeleur.

L'étape c) est mise en œuvre par ordinateur. L'étape c) peut être réalisée sans intervention d'un opérateur, en utilisant uniquement le plan de traitement déterminé à l'étape b). De préférence, un opérateur supervise la mise en œuvre de l'étape c).

A **l'étape d),** les modeleurs maxillaires déterminés à l'étape c) sont fabriqués.

Dans un mode de réalisation préféré de l'invention, les modeleurs maxillaires sont fabriqués par thermoformage ou par impression 3D au moyen d'une imprimante 3D.

La figure 6 est un schéma en bloc d'un dispositif pour mettre en œuvre un procédé de fabrication selon l'invention.

Un dispositif pour la mise en œuvre d'un procédé de fabrication selon l'invention comporte des moyens d'acquisition 4 d'un modèle initial 2 pour la mise en œuvre d'une étape a) d'un procédé selon l'invention, un programme d'ordinateur 6 comportant des instructions qui, lorsque le programme est exécuté par un ordinateur, conduisent celui-ci à mettre en œuvre les étapes b) et c), et une machine de fabrication 8 pour la mise en œuvre d'une étape d).

Le dispositif peut comporter en outre des moyens de communication digitale 5 et 7. En particulier, le dispositif peut comporter des moyens de communication digitale 5 entre les moyens d'acquisition du modèle initial 4 et le programme d'ordinateur 6, permettant la transmission du modèle initial des moyens d'acquisition 4 vers le programme d'ordinateur 6. Le dispositif peut comporter des moyens de communication digitale 7 entre le programme d'ordinateur 6 et la machine de fabrication 8. Par exemple le programme d'ordinateur peut envoyer un fichier au format STL comportant des indications nécessaires à la fabrication des modeleurs maxillaires à la machine de fabrication, par exemple une imprimante 3D.

La machine de fabrication 8 peut être une imprimante 3D.

Les moyens d'acquisition 4 peuvent être un scanner 3D.

Comme cela apparaît clairement à présent, un modeleur maxillaire selon l'invention permet de faciliter et d'automatiser la fabrication d'appareils orthodontiques pour un traitement d'expansion palatale.

En outre, un modeleur maxillaire, dans un mode de réalisation qui n'est pas selon l'invention, n'est pas limité à la réalisation d'une expansion palatale classiquement effectuée par une plaque à vérin. En effet, un modeleur maxillaire permet aussi de modifier la forme du palais et de modifier le positionnement des dents. En particulier, la modification de la forme du palais a un impact sur la forme du visage en général.

Un modeleur maxillaire selon l'invention permet en outre d'améliorer l'hygiène dentaire lors du port du modeleur maxillaire, limitant considérablement les risques d'accumulation d'aliments dans l'appareil orthodontique.

Le confort de l'utilisateur lors du port d'un modeleur maxillaire est amélioré par rapport au port d'une plaque à vérin, notamment grâce à l'absence de fils métalliques et de vérins mais également grâce à la forme du modeleur maxillaire qui s'adapte particulièrement bien à la forme du palais. La pause et le retrait de l'appareil orthodontique est également facilité.

Enfin, le modeleur maxillaire permet le déplacement de dents parallèlement à l'expansion palatale, permettant d'accélérer la mise en œuvre des traitements orthodontiques.

### Exemple : modification de la forme du visage

L'invention est utilisée pour modifier la forme du palais, et ainsi modifier la forme du visage, par exemple à des fins esthétiques, de préférence exclusivement esthétiques.

Selon l'invention, la forme des cavités des première et deuxième parties dentaires est adaptée pour, dans la position de service, maintenir en position le modeleur maxillaire sur les dents, sans exercer de contrainte sur les dents tendant à élargir l'arcade dentaire, voire sans exercer de contrainte sur les dents tendant à modifier l'agencement des dents.

Dans une variante qui n'est pas préférée, la modification de la forme du palais a également un effet thérapeutique.

Dans un mode de réalisation qui ne fait pas partie de la présente invention, la forme des cavités de la première et/ou de la deuxième parties dentaires est adaptée pour, dans la position de service, maintenir en position le modeleur maxillaire sur les dents, tout en exerçant une contrainte sur les dents pour élargir l'arcade et/ou modifier l'agencement des dents.

La description concerne ainsi un procédé de fabrication d'une série de modeleurs maxillaires, ledit procédé comportant les étapes suivantes :
A) détermination d'une forme de visage souhaitée pour l'utilisateur, ou « forme finale », de préférence au moyen de règles esthétiques ou thérapeutiques, de préférence exclusivement esthétiques ;
B) fabrication d'une série de modeleurs maxillaires adaptée de manière à modifier la forme du visage de l'utilisateur pour la rapprocher de la forme finale, en déformant le palais de l'utilisateur.

Un tel procédé peut être mis en oeuvre pour exécuter la fabrication d'une série de modeleurs maxillaires de l'invention.

Les règles peuvent en particulier fixer une valeur, ou une plage de valeurs pour un paramètre choisi parmi :
- une distance entre deux points, par exemple un point situé au milieu du front au niveau de l'implantation capillaire, et un point inter-arcades sourcilières, ou entre un point inter-arcades sourcilières et un point sous nasal ou entre un point sous nasal et un point mentonnier ;
- une distance entre les deux commissures des lèvres du patient lorsqu'il sourit ;
- une largeur pour une dentition représentée sur une image de sourire ;
- une distance entre une droite passant par un point inter-arcades sourcilières et un point sous nasal, et le point inter-incisif des incisives centrales supérieures ;
- une distance entre une droite passant par la jonction des premières incisives supérieure et une droite passant par la jonction des premières incisives inférieures;
- un angle entre une droite passant par au moins deux points parmi un point inter-arcades sourcilières, un point sous nasal et un point inter-incisives et une droite passant par un point au niveau de la cuspide de la première prémolaire gauche, ou droite, et un point au niveau de la jonction de l'émail-cément de la première prémolaire gauche, ou droite respectivement.

Le nombre de règles est de préférence supérieur à 2, 3, 5 et/ou inférieur à 50.

De simples essais permettent d'établir une corrélation entre une forme du palais et les valeurs des paramètres. L'opérateur peut ainsi définir une série de modeleurs permettant de progressivement modifier la forme du palais, et donc la forme du visage jusqu'à atteindre la forme souhaitée.

La série de modeleurs comporte de préférence plus de 2, plus de 5, plus de 10 et/ou moins de 100 modeleurs.

De préférence, la série de modeleurs maxillaires est fabriquée suivant un procédé comportant les étapes successives suivantes :
a) génération d'un modèle tridimensionnel numérique Mᵢₙᵢₜᵢₐₗ du palais et de l'arcade dentaire destinée à porter les modeleurs maxillaires, dit « modèle initial »,
b) à partir du modèle initial, génération d'un plan de traitement pour modifier la forme du palais en déterminant un modèle tridimensionnel numérique final M_{f}, dit « modèle final », et des modèles tridimensionnels numériques intermédiaires Mᵢ, dits « modèles intermédiaires », les modèles intermédiaires représentant des configurations du palais telles qu'attendues à différents instants du plan de traitement, dits « instants intermédiaires », en vue d'atteindre une configuration finale du palais, la configuration finale étant représentée par le modèle final, les modèles intermédiaires étant déterminés pour simuler une modification progressive de la forme du palais ;
c) pour chaque modèle intermédiaire et final déterminé à l'étape b), conception, au moyen d'un ordinateur, d'un modeleur maxillaire de sorte à obtenir ladite série de modeleurs maxillaires destinés à être portés successivement,
d) fabrication des modeleurs maxillaires, de préférence en un matériau polymère, de préférence transparent, de préférence par thermoformage ou par impression 3D.

On détermine la configuration finale du palais en fonction de la forme souhaitée, prédéterminée, pour le visage de l'utilisateur, de préférence en fonction de règles esthétiques et/ou de règles thérapeutiques, en particulier pour limiter le risque de ronflement.

L'intervalle entre deux instants intermédiaires successifs est de préférence inférieur à 1 mois, de préférence inférieur à deux semaines, de préférence encore inférieur à dix jours.

Notamment dans cet exemple d'application de l'invention, la partie palatale centrale est configurée pour, dans la position de service, exercer sur le palais des forces adaptées pour en modifier la forme. De préférence, lesdites forces sont adaptées pour, dans la position de service, provoquer un déplacement de plus de1 dixième de millimètres, plus de 5 dixièmes de millimètres et/ou moins de 100 dixièmes de millimètres, moins de 10 dixièmes de millimètres, d'au moins un os du palais.

Dans un mode de réalisation, ledit déplacement modifie le volume de la cavité orale de l'utilisateur, par exemple de plus de 5% ou de plus de 10%, et/ou de moins de 20%. Le déplacement peut être en particulier au moins en partie radial, par rapport au centre de la cavité orale de l'utilisateur. La partie palatale peut par exemple pousser l'os vers le haut.

La partie palatale peut exercer une action différente sur le palais, en fonction de la région de la partie palatale considérée. En particulier, l'intensité et/ou l'orientation de la force locale exercée par la partie palatale sur le palais, dans la position de service, dépend de préférence de la région de la partie palatale considérée.

La partie palatale est configurée pour exercer une action directement (sans agir par l'intermédiaire des dents) sur les os du palais, dans la position de service, de préférence de manière à modifier les positions relatives desdits os.

La modification des positions relatives des os conduit à une modification de la forme du visage de l'utilisateur tendant à rapprocher ladite forme de la forme prédéterminée.

La description présente aussi un procédé modification de la forme du visage d'un utilisateur, ledit procédé comportant les étapes A) et B), puis l'étape C) suivante : C) port des modeleurs maxillaires par l'utilisateur, suivant un ordre prédéfini.

Dans un mode de réalisation, l'étape C) ne modifie sensiblement pas l'orientation des dents autour de leurs axes, et/ou ne modifie pas la forme générale de l'arcade dentaire, en particulier pour l'élargir ou la rétrécir, et/ou ne modifie pas l'occlusion.

Dans un mode de réalisation, l'étape C) n'a pas d'effet thérapeutique et/ou n'est pas suivie (par exemple dans le mois ou dans les 6 mois qui suivent la fin de l'étape C)) d'un traitement thérapeutique, par exemple pour corriger une malocclusion. En particulier, si les modeleurs maxillaires modifient l'arcade maxillaire lorsqu'ils modifient la forme du palais, ces modifications ont de préférence un effet exclusivement esthétique. L'étape C) ne constitue pas une étape préalable à un traitement orthodontique.

La présente invention est définie par les revendications.

## Revendications

1. Modeleur maxillaire (2) destiné à être porté, dans une position de service, par une arcade dentaire d'un utilisateur pour modifier la forme du palais, le modeleur maxillaire étant monobloc et amovible et comportant :
- une partie palatale centrale (22) configurée pour être en contact avec le palais de l'utilisateur lorsque le modeleur maxillaire est en position de service,
- une première et une deuxième parties dentaires (24 ; 26) comportant chacune au moins une, de préférence plusieurs cavités configurées pour recevoir des dents de l'utilisateur lorsque le modeleur maxillaire est en position de service, les première et deuxième parties dentaires s'étendant de part et d'autre de la partie palatale centrale,
la partie palatale centrale étant configurée pour, dans la position de service, exercer sur le palais des forces adaptées pour en modifier la forme,
le modeleur maxillaire étant **caractérisé en ce que** la forme des cavités des première et deuxième parties dentaires est adaptée pour, dans la position de service, maintenir en position le modeleur maxillaire sur les dents, sans exercer de contrainte sur les dents tendant à élargir l'arcade dentaire.

2. Modeleur selon la revendication précédente, dans lequel lesdites forces sont adaptées pour, dans la position de service, provoquer un déplacement de plus de 0,1 millimètre d'au moins un os du palais.

3. Modeleur selon la revendication immédiatement précédente, dans lequel, lorsque le modeleur est porté par l'utilisateur, ledit déplacement modifie le volume de la cavité orale de l'utilisateur.

4. Modeleur selon l'une quelconque des revendications précédentes, dans lequel la partie palatale est configurée pour que l'intensité de la force locale exercée par la partie palatale sur le palais, dans la position de service, dépende de la région de la partie palatale dans laquelle est appliquée ladite force.

5. Modeleur selon l'une quelconque des revendications précédentes, dans lequel la partie palatale présente une épaisseur variable.

6. Modeleur selon l'une quelconque des revendications précédentes, dans lequel la partie palatale est configurée pour modifier les positions relatives des os du palais de manière à modifier la forme du visage de l'utilisateur pour rapprocher ladite forme d'une forme prédéterminée.

7. Modeleur selon l'une quelconque des revendications précédentes, étant en un matériau polymère, de préférence transparent.

8. Modeleur selon l'une quelconque des revendications précédentes, fabriqué par impression 3D et/ou par thermoformage.

9. Modeleur selon l'une quelconque des revendications précédentes, dans lequel la forme des cavités des première et deuxième parties dentaires est adaptée pour, dans la position de service, maintenir en position le modeleur maxillaire sur les dents, sans exercer de contrainte tendant à modifier l'agencement des dents.

10. Modeleur selon l'une quelconque des revendications 1 à 8, dans lequel la forme des cavités de la première et/ou de la deuxième parties dentaires est adaptée pour, dans la position de service, maintenir en position le modeleur maxillaire sur les dents, tout en exerçant une contrainte sur les dents pour élargir l'arcade et/ou modifier l'agencement des dents.

11. Série de modeleurs maxillaires selon l'une quelconque des revendications précédentes, les modeleurs maxillaires étant configurés de manière à modifier progressivement la forme du visage de l'utilisateur pour la rendre conforme à une forme prédéterminée lorsqu'ils sont portés successivement, selon un ordre prédéfini, par l'utilisateur.

12. Procédé de fabrication d'une série de modeleurs maxillaires selon la revendication immédiatement précédente, ledit procédé comportant les étapes successives suivantes :
a) génération d'un modèle tridimensionnel numérique (Mᵢₙᵢₜᵢₐₗ) du palais et de l'arcade dentaire destinée à porter les modeleurs maxillaires, dit « modèle initial »,
b) à partir du modèle initial, génération d'un plan de traitement pour modifier la forme du palais en déterminant un modèle tridimensionnel numérique final (M_{f}), dit « modèle final », et des modèles tridimensionnels numériques intermédiaires (Mᵢ), dits « modèles intermédiaires », les modèles intermédiaires représentant des configurations du palais telles qu'attendues à différents instants du plan de traitement, dits « instants intermédiaires », en vue d'atteindre une configuration finale du palais, la configuration finale étant représentée par le modèle final, les modèles intermédiaires étant déterminés pour simuler une modification progressive de la forme du palais ;
c) pour chaque modèle intermédiaire et final déterminé à l'étape b), conception, au moyen d'un ordinateur, d'un modeleur maxillaire de sorte à obtenir ladite série de modeleurs maxillaires destinés à être portés successivement,
d) fabrication des modeleurs maxillaires, de préférence par thermoformage ou par impression 3D.

13. Procédé selon la revendication immédiatement précédente, dans lequel on détermine la configuration finale du palais en fonction d'une forme prédéterminée pour le visage de l'utilisateur, ladite forme prédéterminée étant déterminée pour limiter le risque de ronflement.

14. Procédé selon l'une quelconque des revendications 12 à 13, dans lequel on détermine la configuration finale du palais en fonction d'une forme prédéterminée pour le visage de l'utilisateur, ladite forme prédéterminée étant déterminée au moyen de règles esthétiques ou thérapeutiques fixant une valeur, ou une plage de valeurs pour un paramètre choisi parmi :
- une distance entre un point situé au milieu du front au niveau de l'implantation capillaire, et un point inter-arcades sourcilières, ou entre un point inter-arcades sourcilières et un point sous nasal ou entre un point sous nasal et un point mentonnier ;
- une distance entre les deux commissures des lèvres du patient lorsqu'il sourit ;
- une largeur pour une dentition représentée sur une image de sourire ;
- une distance entre une droite passant par un point inter-arcades sourcilières et un point sous nasal, et le point inter-incisif des incisives centrales supérieures ;
- une distance entre une droite passant par la jonction des premières incisives supérieure et une droite passant par la jonction des premières incisives inférieures ;
- un angle entre une droite passant par au moins deux points parmi un point inter-arcades sourcilières, un point sous nasal et un point inter-incisives et une droite passant par un point au niveau de la cuspide de la première prémolaire gauche, ou droite, et un point au niveau de la jonction de l'émail-cément de la première prémolaire gauche, ou droite respectivement.

## Patentansprüche

1. Oberkiefermodellierer (2), der dazu bestimmt ist, in einer Einsatzposition von einem Zahnbogen eines Benutzers getragen zu werden, um die Form des Gaumens zu verändern, wobei der Oberkiefermodellierer einstückig und herausnehmbar ist und Folgendes umfasst:
- einen zentralen Gaumenteil (22), der dazu ausgebildet ist, mit dem Gaumen des Benutzers in Kontakt zu stehen, wenn der Oberkiefermodellierer in der Einsatzposition ist,
- einen ersten und einen zweiten Zahnteil (24; 26), die jeweils mindestens einen, vorzugsweise mehrere Hohlräume aufweisen, die dazu ausgebildet sind, Zähne des Benutzers aufzunehmen, wenn der Oberkiefermodellierer in der Einsatzposition ist,
wobei sich der erste und der zweite Zahnteil beidseits des zentralen Gaumenteils erstrecken,
wobei der zentrale Gaumenteil dazu ausgebildet ist, in der Einsatzposition Kräfte auf den Gaumen auszuüben, die geeignet sind, seine Form zu verändern,
wobei der Oberkiefermodellierer **dadurch gekennzeichnet ist, dass** die Form der Hohlräume des ersten und des zweiten Zahnteils geeignet ist, den Oberkiefermodellierer in der Einsatzposition auf den Zähnen in Position zu halten, ohne eine Beanspruchung auf die Zähne auszuüben, die dazu tendiert, den Zahnbogen zu erweitern.

2. Modellierer nach dem vorhergehenden Anspruch, wobei die Kräfte geeignet sind, in der Einsatzposition eine Bewegung um mehr als 0,1 Millimeter mindestens eines Knochens des Gaumens zu bewirken.

3. Modellierer nach dem unmittelbar vorhergehenden Anspruch, wobei, wenn der Modellierer von dem Benutzer getragen wird, die Bewegung das Volumen der Mundhöhle des Benutzers verändert.

4. Modellierer nach einem der vorhergehenden Ansprüche, wobei der Gaumenteil so ausgebildet ist, dass die Intensität der lokalen Kraft, die in der Einsatzposition von dem Gaumenteil auf den Gaumen ausgeübt wird, von dem Bereich des Gaumenteils abhängt, in dem die Kraft aufgebracht wird.

5. Modellierer nach einem der vorhergehenden Ansprüche, wobei der Gaumenteil eine variable Dicke aufweist.

6. Modellierer nach einem der vorhergehenden Ansprüche, wobei der Gaumenteil dazu ausgebildet ist, die relativen Positionen der Knochen des Gaumens zu verändern, so dass die Form des Gesichts des Benutzers verändert wird, um die Form einer vorbestimmten Form anzunähern.

7. Modellierer nach einem der vorhergehenden Ansprüche, der aus einem, vorzugsweise transparenten, Polymermaterial besteht.

8. Modellierer nach einem der vorhergehenden Ansprüche, der durch 3D-Druck und/oder Thermoformen gefertigt ist.

9. Modellierer nach einem der vorhergehenden Ansprüche, wobei die Form der Hohlräume des ersten und des zweiten Zahnteils geeignet ist, den Oberkiefermodellierer in der Einsatzposition auf den Zähnen in Position zu halten, ohne eine Beanspruchung auszuüben, die dazu tendiert, die Anordnung der Zähne zu verändern.

10. Modellierer nach einem der Ansprüche 1 bis 8, wobei die Form der Hohlräume des ersten und/oder des zweiten Zahnteils geeignet ist, den Oberkiefermodellierer in der Einsatzposition auf den Zähnen in Position zu halten und dabei eine Beanspruchung auf die Zähne auszuüben, um den Bogen zu erweitern und/oder die Anordnung der Zähne zu verändern.

11. Serie von Oberkiefermodellierern nach einem der vorhergehenden Ansprüche, wobei die Oberkiefermodellierer dazu ausgebildet sind, die Form des Gesichts des Benutzers progressiv zu verändern, um sie an eine vorbestimmte Form anzupassen, wenn sie nacheinander in einer vorgegebenen Reihenfolge von dem Benutzer getragen werden.

12. Verfahren zur Fertigung einer Serie von Oberkiefermodellierern nach dem unmittelbar vorhergehenden Anspruch, wobei das Verfahren die folgenden aufeinanderfolgenden Schritte umfasst:
a) Erzeugen eines dreidimensionalen digitalen Modells (Mᵢₙᵢₜᵢₐₗ) des Gaumens und des Zahnbogens, der dazu bestimmt ist, die Oberkiefermodellierer zu tragen, "initiales Modell" genannt,
b) ausgehend von dem initialen Modell, Erzeugen eines Behandlungsplans, um die Form des Gaumens zu verändern, indem ein finales dreidimensionales digitales Modell (M_{f}), "finales Modell" genannt, und dreidimensionale digitale Zwischenmodelle (Mᵢ), "Zwischenmodelle" genannt, bestimmt werden, wobei die Zwischenmodelle Konfigurationen des Gaumens darstellen, wie sie zu verschiedenen Zeitpunkten des Behandlungsplans, "Zwischenzeitpunkte" genannt, erwartet werden, im Hinblick darauf, eine finale Konfiguration des Gaumens zu erreichen, wobei die finale Konfiguration durch das finale Modell dargestellt wird, wobei die Zwischenmodelle bestimmt werden, um eine progressive Veränderung der Form des Gaumens zu simulieren;
c) für jedes im Schritt b) bestimmte Zwischenmodell und finale Modell, das Entwerfen eines Oberkiefermodellierers mittels eines Computers, so dass die Serie von Oberkiefermodellierern erhalten wird, die dazu bestimmt sind, nacheinander getragen zu werden,
d) Fertigen der Oberkiefermodellierer, vorzugsweise durch Thermoformen oder 3D-Druck.

13. Verfahren nach dem unmittelbar vorhergehenden Anspruch, wobei die finale Konfiguration des Gaumens in Abhängigkeit von einer vorbestimmten Form für das Gesicht des Benutzers bestimmt wird, wobei die vorbestimmte Form bestimmt wird, um die Gefahr des Schnarchens zu begrenzen.

14. Verfahren nach einem der Ansprüche 12 bis 13, wobei die finale Konfiguration des Gaumens in Abhängigkeit von einer vorbestimmten Form für das Gesicht des Benutzers bestimmt wird, wobei die vorbestimmte Form mittels ästhetischer oder therapeutischer Regeln bestimmt wird, die einen Wert oder einen Wertebereich für einen Parameter festlegen, der ausgewählt ist aus:
- einem Abstand zwischen einem Punkt, der in der Mitte der Stirn am Haaransatz gelegen ist, und einem Punkt zwischen den Augenbrauenbögen oder zwischen einem Punkt zwischen den Augenbrauenbögen und einem Punkt unter der Nase oder zwischen einem Punkt unter der Nase und einem Kinnpunkt;
- einem Abstand zwischen den beiden Mundwinkeln des Patienten, wenn er lächelt;
- einer Breite für ein Gebiss, das auf einem Lächelbild dargestellt ist;
- einem Abstand zwischen einer Geraden, die durch einen Punkt zwischen den Augenbrauenbögen und einem Punkt unter der Nase verläuft, und dem Inzisalpunkt der oberen mittleren Schneidezähne;
- einem Abstand zwischen einer Geraden, die durch die Verbindung der ersten oberen Schneidezähne verläuft, und einer Geraden, die durch die Verbindung der ersten unteren Schneidezähne verläuft;
- einem Winkel zwischen einer Geraden, die durch mindestens zwei Punkte unter einem Punkt zwischen den Augenbrauenbögen, einem Punkt unter der Nase und einem Inzisalpunkt verläuft, und einer Geraden, die durch einen Punkt auf Höhe des Höckers des ersten linken oder rechten Prämolaren und einen Punkt auf Höhe der Schmelz-Zement-Grenze des ersten linken bzw. rechten Prämolaren verläuft.

## Claims

1. Maxillary remodeller (2) intended to be worn, in an operative position, on a dental arch of a user to modify the shape of the palate, the maxillary remodeller being one-piece and removable and comprising:
- a central palatal portion (22) configured to be in contact with the user's palate when the maxillary remodeller is in the operative position,
- a first dental portion and a second dental portion (24; 26) each comprising at least one cavity, preferably several cavities, configured to receive the user's teeth when the maxillary remodeller is in the operative position,
the first and second dental portions extending on opposite sides of the central palatal portion,
the central palatal portion being configured, in the operative position, to exert, on the palate, forces capable of modifying the shape thereof,
the maxillary remodeller being **characterized in that** the shape of the cavities of the first and second dental portions is designed, in the operative position, to hold the maxillary remodeller in position on the teeth, without exerting stress on the teeth tending to widen the dental arch.

2. Remodeller according to the preceding claim, wherein said forces are capable, in the operative position, of causing a displacement of more than 0.1 millimetres of at least one bone of the palate.

3. Remodeller according to the immediately preceding claim, wherein, when the remodeller is worn by the user, said displacement modifies the volume of the user's oral cavity.

4. Remodeller according to any one of the preceding claims, wherein the palatal portion is configured such that the intensity of the local force exerted by the palatal portion on the palate, in the operative position, depends on the region of the palatal portion in which said force is applied.

5. Remodeller according to any one of the preceding claims, wherein the palatal portion is of variable thickness.

6. Remodeller according to any one of the preceding claims, wherein the palatal portion is configured to modify the relative positions of the bones of the palate so as to modify the shape of the user's face to bring said shape closer to a predetermined shape.

7. Remodeller according to any one of the preceding claims, made of a polymeric material, which is preferably transparent.

8. Remodeller according to any one of the preceding claims, manufactured by 3D printing and/or by thermoforming.

9. Remodeller according to any one of the preceding claims, wherein the shape of the cavities of the first and second dental portions is designed, in the operative position, to hold the maxillary remodeller in position on the teeth, without exerting stress tending to modify the arrangement of the teeth.

10. Remodeller according to any one of Claims 1 to 8, wherein the shape of the cavities of the first and/or of the second dental portions is designed, in the operative position, to hold the maxillary remodeller in position on the teeth, while exerting a stress on the teeth to widen the arch and/or modify the arrangement of the teeth.

11. Series of maxillary remodellers according to any one of the preceding claims, the maxillary remodellers being configured to gradually modify the shape of the user's face in order to make it conform to a predetermined shape when they are worn successively in a predetermined order by the user.

12. Method for manufacturing a series of maxillary remodellers according to the immediately preceding claim, said method comprising the following successive steps:
a) generating a digital three-dimensional model (Mᵢₙᵢₜᵢₐₗ) of the palate and the dental arch intended to bear the maxillary remodellers, referred to as the "initial model",
b) from the initial model, generating a treatment plan to modify the shape of the palate by determining a final digital three-dimensional model (M_{f}), referred to as the "final model", and intermediate digital three-dimensional models (Mᵢ), referred to as "intermediate models", the intermediate models representing expected configurations of the palate at different times of the treatment plan, referred to as "intermediate times", with a view to achieving a final configuration of the palate, the final configuration being represented by the final model, the intermediate models being determined so as to simulate a gradual modification of the shape of the palate;
c) for each intermediate and final model determined in step b), designing, using a computer, a maxillary remodeller so as to obtain said series of maxillary remodellers intended to be worn successively,
d) manufacturing the maxillary remodellers, preferably by thermoforming or by 3D printing.

13. Method according to the immediately preceding claim, wherein the final configuration of the palate is determined as a function of a predetermined shape for the user's face, said predetermined shape being determined so as to limit the risk of snoring.

14. Method according to any one of Claims 12 to 13, wherein the final configuration of the palate is determined as a function of a predetermined shape for the user's face, said predetermined shape being determined using aesthetic or therapeutic rules that set a value, or a range of values for a parameter chosen from:
- a distance between a midpoint of the forehead at the hairline and an intersuperciliary arch point, or between an intersuperciliary arch point and a subnasale point, or between a subnasale point and a menton point;
- a distance between the two commissures of the patient's lips when the patient is smiling;
- a width of a dentition represented in an image of a smile;
- a distance between a line passing through an intersuperciliary arch point and a subnasale point, and the interincisal point of the upper central incisors;
- a distance between a line passing through the junction between the first upper incisors and a line passing through the junction between the first lower incisors;
- an angle between a line passing through at least two points selected from an intersuperciliary arch point, a subnasale point and an interincisal point, and a line passing through a point at the cusp of the left or right first premolar and a point at the cementoenamel junction of the respective left or right first premolar.
